# EUROPEAN PATENT APPLICATION

(11) **EP 2 573 458 A1**
(43) Date of publication of application: **27.03.2013**
(21) Application number: 12184122.5
(22) Date of filing: 12.09.2012
(51) Int. Cl.: F21V 5/00, G02B 6/00, F21Y 105/00

(54) **Lighting device with uniformized luminous intensity**

(30) Priority: 22.09.2011 TW 100217813 U
(71) Applicant: Flos S.P.A., 25073 Bovezzo (Brescia) (IT)
(72) Inventor: Chun Min, Ko, I-25073 Bovezzo, BRESCIA (TW); Yuh Sheng, Lin, I-25073 Bovezzo, BRESCIA (TW)
(74) Representative: Pulieri, Gianluca Antonio

(57) **Abstract**

A lighting device (1,1',1"), for example a flat lighting panel, comprises a light guide (12), at least two light-emitting diode assemblies (10) respectively emitting light toward the two opposite sides of the light guide (12), a reflective sheet portion (14) and a sheet plate (20) comprising a first light-pervious surface (8) close to the light guide (12). A plurality of miniature structures (18) is distributed over the first surface (2) of the light guide (12) and a plurality of geometric structures (22) is distributed over the second light-pervious surface (6) to uniformize the luminous intensity.

## Description

### BACKGROUND OF THE INVENTION

### Field of the Invention

. The invention relates to a lighting device with a uniformized luminous curve, and more particularly to a lighting device with uniformized luminous intensity. For example, the lighting device is a flat lighting panel.

### Description of the Related Art

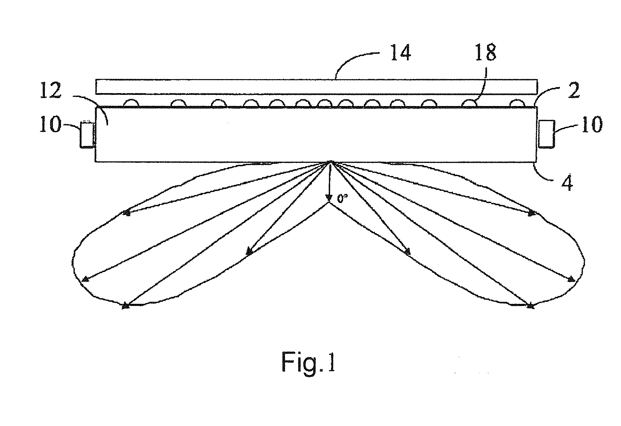

. FIG. 1 is a schematic view of a conventional lamp. The lamp comprises at least two light-emitting diode (LED) assemblies 10, a light guide 12, and a reflective portion 14. The light guide 12 comprises a first surface 2 and a second surface 4. A plurality of miniature structures 18 is distributed over the first surface 2. Specifically, the miniature structures 18 are dispersed at two ends of the first surface 2 and are concentrated at the middle of the first surface 2, changing a refracting angle of light reflected by the reflective portion 14, and further refracting the light out of the light guide 12 with a larger refracting angle.

. The following described vertical angle is referred to as an included angle between a measured direction and a horizontal plane. For example, the vertical angle right beneath the lamp is 0°, and the vertical angle is 30° when the measured direction is deflected by 30°.

. As shown by a luminous curve of the lamp of FIG. 1, illumination under the lamp in the vertical angle 0° is minimal while the illumination beside the vertical angle 0° (i.e. the vertical angle is greater or less than 0°) is maximal. When multiple conventional lamps are disposed in an indoor lamp device, illumination distribution in an indoor space is uneven.

### BRIEF SUMMARY OF THE INVENTION

. A detailed description is given in the following embodiments with reference to the accompanying drawings.

. An exemplary embodiment of the invention provides a lighting device with a uniformized luminous curve, comprising a light guide, at least two light-emitting diode (LED) assemblies, a reflective portion, and a plate. The light-emitting diode assemblies respectively emit light toward two opposite sides of the light guide.
The reflective portion reflects light output via the light guide to the exterior of the lighting device. The plate comprises a first light-pervious surface and a second light-pervious surface opposite to the first light-pervious surface. The first light-pervious surface is closer to the light guide than the second light-pervious surface to receive the light output from the light guide. A plurality of geometric structures is distributed over the second light-pervious surface. The geometric structures guide the light transmitted from the first light-pervious surface to the exterior of the second light-pervious surface, uniformizing a luminous intensity within a specific vertical angle range.

. Each light-emitting diode assembly comprises at least one LED.

. The light guide comprises a first surface and a second surface opposite to the first surface. The first surface directly faces the reflective portion. A plurality of miniature structures with different intervals is distributed over the first surface to change a refracting angle of the light with respect to the light guide. The second surface opposes the first light-pervious surface of the plate.

. The geometric structures are semi-cylindrical. The cross section of the semi-cylindrical geometric structures contacts the second light-pervious surface of the plate. The direction of a vertex angle faces toward the exterior of the lighting device.

. The distributed interval of part of the miniature structures proximate to two opposite sides of the first surface exceeds the distributed interval of the other miniature structures located in the middle of the first surface.

. The miniature structures are curved. The geometric structures are circular, elliptical, parabolic, a section of a hyperbola, or a combination thereof.

. The specific vertical angle range is between 0° and 45°. The maximal luminous intensity is distributed in a range between a vertical angle 35° and a vertical angle 55°.

. The lighting device with a uniformized luminous curve further comprises a diffusion sheet disposed between the second surface of the light guide and the first light-pervious surface of the plate, adjusting a refracting angle of the light output via the second light-pervious surface. The maximal luminous intensity is distributed in a range between a vertical angle 20° and a vertical angle 40°.

. The lighting device with a uniformized luminous curve further comprises a diffusion sheet directly facing the geometric structures distributed over the second light-pervious surface of the plate, adjusting a refracting angle of the light output via the second light-pervious surface. The specific vertical angle range is between 0° and 30°. The maximal luminous intensity is distributed in a range between a vertical angle 20° and a vertical angle 40°.

### BRIEF DESCRIPTION OF THE DRAWINGS

. The invention can be more fully understood by reading the subsequent detailed description and examples with references made to the accompanying drawings, wherein:

. FIG. 1 is a schematic view of a conventional lamp and a luminous curve thereof;

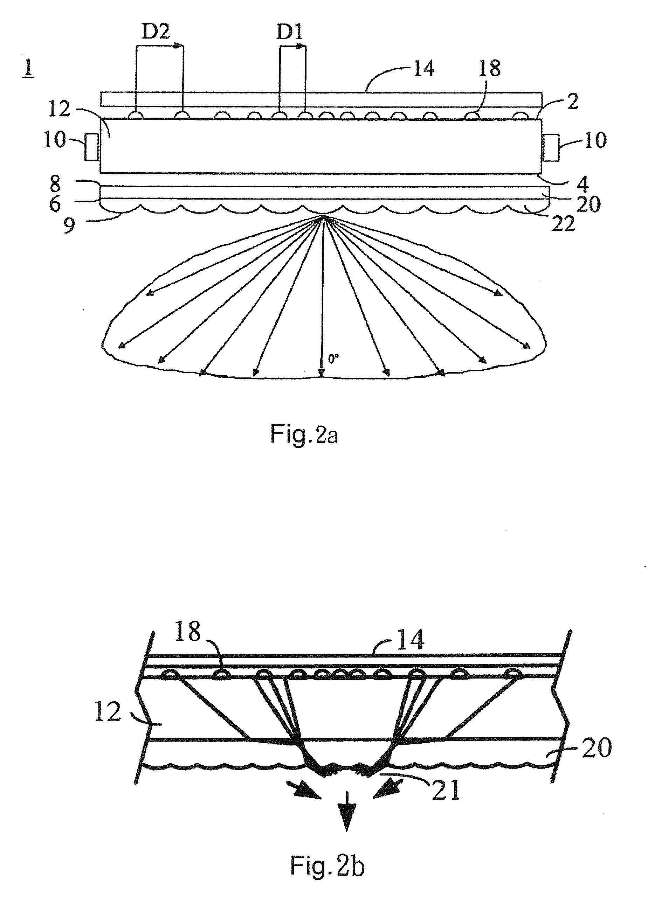

. FIG. 2a is a schematic view of a lighting device, with a uniformized luminous curve, of a first embodiment of the invention;

. FIG. 2b is a schematic view showing an optical route of the lighting device of the first embodiment of the invention;

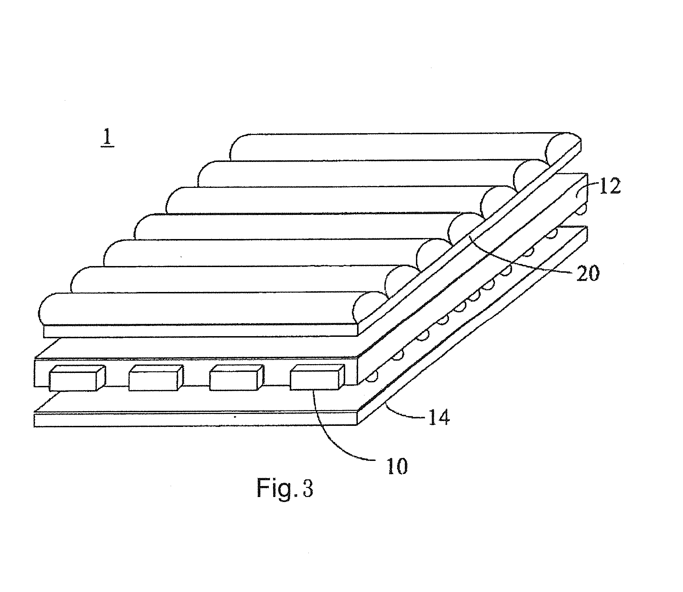

. FIG. 3 is a perspective view of the lighting device of the first embodiment of the invention;

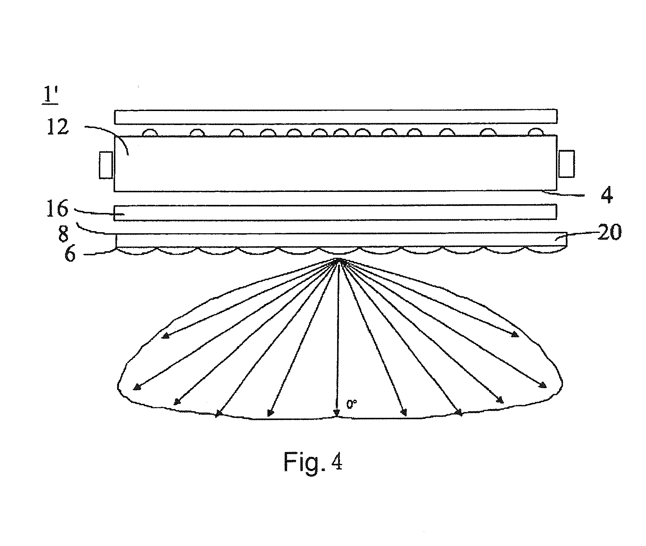

. FIG. 4 is a schematic view of a lighting device, with a uniformized luminous curve, of a second embodiment of the invention;

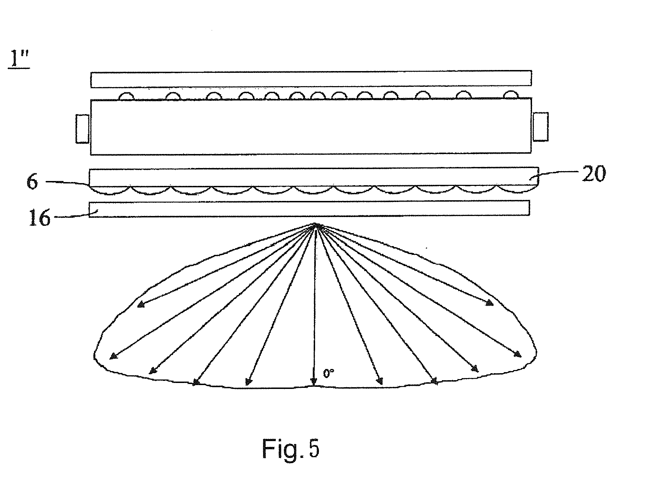

. FIG. 5 is a schematic view of a lighting device, with a uniformized luminous curve, of a third embodiment of the invention;

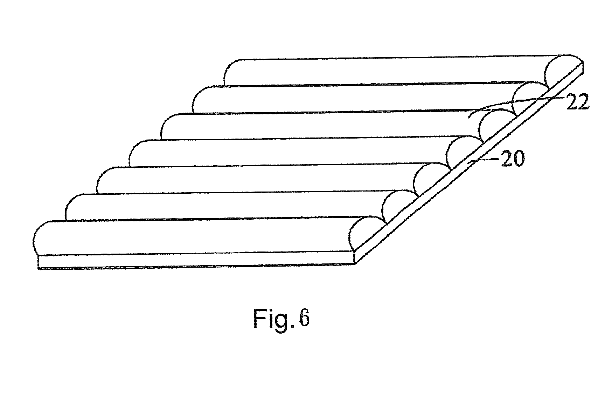

. FIG. 6 is a schematic view of a plate of the invention;

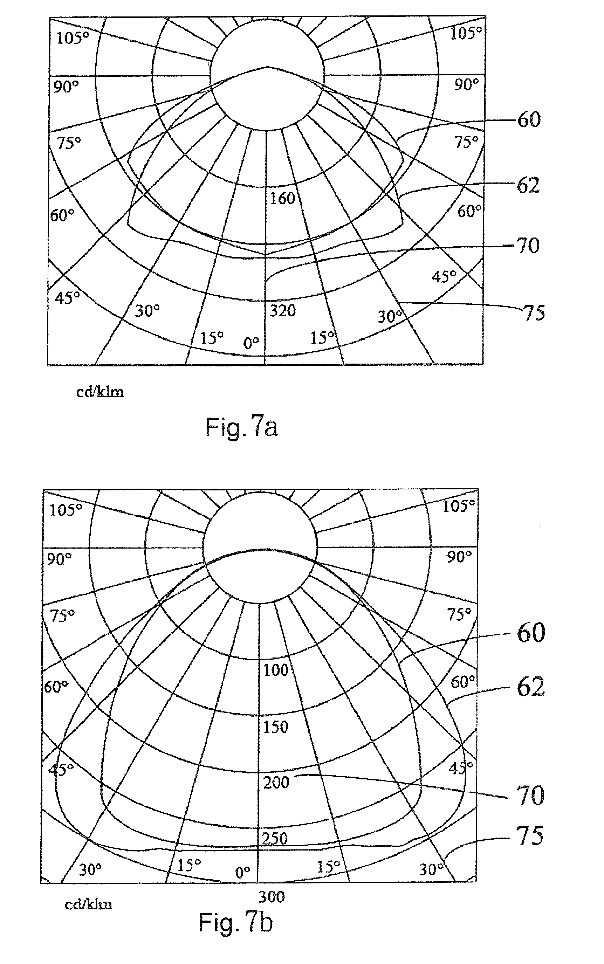

. FIG. 7a is an experimental diagram showing an actual luminous curve of the lighting device of the first embodiment of the invention; and

. FIG. 7b is an experimental diagram showing an actual luminous curve of the lighting device of the second embodiment of the invention.

### DETAILED DESCRIPTION OF THE INVENTION

. The following description is of the best-contemplated mode of carrying out the invention. This description is made for the purpose of illustrating the general principles of the invention and should not be taken in a limiting sense. The scope of the invention is best determined by reference to the appended claims.

. FIG. 2a is a schematic view of a lighting device, with a uniformized luminous curve, of a first embodiment of the invention. FIG. 3 is a perspective view of the lighting device, with the uniformized luminous curve, of the first embodiment of the invention. The lighting device 1, for example, a flat lighting panel, comprises two light-emitting diode (LED) assemblies 10, a light guide 12, a reflective portion 14, and a plate 20.

. Each LED assembly 10 may have at least one or more than one LED. The LED assemblies 10 are respectively disposed on two opposite sides of the light guide 12. Each LED assembly 10 has a light-emitting face emitting light toward the two opposite sides of the light guide 12.

. The light guide 12 comprises a first surface 2 and a second surface 4 opposite to the first surface 2. The first surface 2 directly faces the reflective portion 14. A plurality of miniature structures 18, for example curved, is distributed over the first surface 2, preferably with different intervals. For example, as shown in FIG. 2a, the curved miniature structures 18 are dispersed at two ends of the first surface 2 (with an interval D2) and are concentrated at the middle of the first surface 2 (with an interval D1). As D2 exceeds D1, the refracting angle of the light transmitted from the reflective portion 14 can be changed, thereby enabling the light to be refracted out of the second surface 4 of the light guide 12 with a greater deflected refracting angle. In other embodiments, the miniature structures 18 may be directly formed on or disposed on the first surface 2 by multiple semi-circular or concave-convex structures.

. Preferably, when the light guide has a polygonal shape, for example a square or rectangular shape, the structures 18 are distributed with different intervals; on the contrary, when the light guide has a circular shape, the structures 18 are equally distributed on the first surface 2.

. Preferably, the structures 18 are small recesses, for example micro recesses, obtained on the first surface 2 preferably by means of a calendering of the first surface 2. Preferably, the calendering cylinder acting on the first surface 2 is superficially worked by laser incision, so that surface roughness is mild enough to obtain a uniform luminous intensity.

. Moreover, the structures on the first surface can be obtained by injection moulding.

. The reflective portion 14 may be an independent reflective plate or part of a casing (not shown) of the lighting device 1. The reflective portion 14 can transmit part of the light output by the light guide 12 to the exterior of the lighting device 1.

. The plate 20, preferably in the form of a flexible sheet, for example made by a thermoplastic material such as polycarbonate, comprises a first light-pervious surface 8 and a second light-pervious surface 6 opposite to the first light-pervious surface 8. The first light-pervious surface 8 is closer to the light guide 12 than the second light-pervious surface 6 to receive the light output from the light guide 12. A plurality of geometric structures 22 is distributed over the second light-pervious surface 6. As shown by the first embodiment of FIG. 2a, the geometric structures 22 are semi-cylindrical. The cross section of the semi-cylindrical geometric structures 22 is located above the second light-pervious surface 6 of the plate 20, enabling a vertex 9 of each semi-cylindrical geometric structure 22 to directly face the exterior of the lighting device 1, guiding the light transmitted from the first light-pervious surface 8 to the exterior of the lighting device 1, and further uniformizing luminous intensity within a broader vertical angle range (as will be described later). As shown in the luminous curve of FIG. 2a, the so-called uniformized luminous curve is referred to as the following: the luminous intensity of the lighting device 1 is based on the direction of the vertical angle 0°, and the luminous intensity is substantially and evenly distributed with increase of the angle deflected toward both sides of the vertical angle 0° until the angle reaches a specific deflection angle. FIG. 7a is an experimental diagram showing an actual luminous curve of the first embodiment of the invention, wherein the central longitudinal axis is referred to as luminous intensity/thousand luminous flux (cd/klm), the numeral 75 represents the vertical angle at which the light is emitted, the numeral 60 represents the luminous curve of a horizontal angle of the lighting device 1, and the numeral 62 represents the luminous curve of a vertical angle. As shown in FIG. 7a, the luminous intensity generated between the vertical angle 0° and the vertical angle 45° mostly exceeds 240 cd/klm. Here, the maximal luminous intensity is approximately distributed between the vertical angle 35° and the vertical angle 55°. Thus, the luminous intensity of the lighting device 1 can be evenly distributed between the vertical angle 0° and the vertical angle 45° and is therefore different from that of the conventional lamp. Namely, the uniformized vertical angle range provided by the lighting device 1 of the invention is broader than that provided by the conventional lamp.

. As shown in FIG. 6, the geometric structures 22 distributed over the plate 20 of the first embodiment are not limited to being semi-cylindrical. In other embodiment, the geometric structures 22 may be elliptical, parabolic, a section of a hyperbola, or a combination thereof.

. FIG. 2b is a schematic view showing an optical route of the first embodiment of the invention. Through reflection of the reflective portion 14, the refracting angle of the light 21 can be changed by the miniature structures 18 of the light guide 12. The light 21 is then emitted to the exterior of the lighting device 1 via the geometric structures 22 of the plate 20.

. Preferably, the geometric structures 22 are obtained by means of a calendering of the surface and preferably evenly distributed on the surface.

. FIG. 4 is a schematic view of a lighting device 1', with a uniformized luminous curve, of a second embodiment of the invention. As compared to the first embodiment of FIG. 2a, the lighting device 1' of the second embodiment further comprises a diffusion sheet 16 disposed between the second surface 4 of the light guide 12 and the first light-pervious surface 8 of the plate 20. The diffusion sheet 16 directly faces the first light-pervious surface 8 of the plate 20, adjusting a refracting angle of the light output via the second light-pervious surface 6. The light dispersed toward two sides can be concentrated toward the center of the lighting device, forming a more uniform plane light source. As shown by the luminous curve of FIG. 4, the luminous intensity generated between the vertical angle 0° and the vertical angle 30° of the lighting device 1' of the second embodiment is substantially uniform, wherein the maximal luminous intensity is distributed between the vertical angle 20° and the vertical angle 40°. Structure, disposition, and function of other elements in the lighting device 1' of this embodiment are the same as those in the lighting device 1 of the first embodiment, and explanation thereof is omitted for simplicity.

. FIG. 5 is a schematic view of a lighting device 1", with a uniformized luminous curve, of a third embodiment of the invention. As compared to the first embodiment of FIG. 2a, the lighting device 1" of such embodiment further comprises a diffusion sheet 16 disposed under the second light-pervious surface 6 of the plate 20, for example in the form of a rigid plate, for example made by methacrylate. The diffusion sheet 16 directly faces the first light-pervious surface 8 of the plate 20, adjusting a refracting angle of the light output via the second light-pervious surface 6. The light dispersed toward two sides can be concentrated toward the center of the lighting device, forming a more uniform plane light source. As shown by the luminous curve of FIG. 5, the luminous intensity generated between the vertical angle 0° and the vertical angle 30° of the lighting device 1" of the third embodiment is substantially uniform, wherein the maximal luminous intensity is distributed between the vertical angle 20° and the vertical angle 40°. Structure, disposition, and function of other elements in the lighting device 1" of this embodiment are the same as those in the lighting device 1 of the first embodiment, and explanation thereof is omitted for simplicity.

. The aforementioned lighting device 1' and lighting device 1" can also employ the semi-cylindrical plate 20. Nevertheless, the geometric structures 22 may be circular, elliptical, parabolic, a section of a hyperbola, or a combination thereof. FIG. 7b is an experimental diagram showing an actual luminous curve of the lighting device 1' of the second embodiment of the invention. Explanation of FIG. 7b is the same as that of FIG. 7a and is thus omitted for simplicity.

. In conclusion, the disclosed lighting devices use the geometric structures formed on the plate to effectively disperse light, thereby obtaining a uniformized luminous intensity within a broader vertical angle range, and further obtaining a more uniformized illumination as compared to the conventional lamp. Moreover, the disclosed lighting devices can be employed in a ceiling lamp, a lamp for a parking lot, a walkway lamp, etc. Additionally, as the vertical angle range of the disclosed lighting devices can be expanded to an extremely large level, the interval between the disclosed lighting devices is large, increasing the distance between the disclosed lighting devices, providing even illumination, and further reducing the number of the arranged lighting devices and costs.

. While the invention has been described by way of example and in terms of preferred embodiment, it is to be understood that the invention is not limited thereto. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A lighting device (1,1") comprising:
- a light guide (12), comprising a first surface (2) and a second surface (4) opposite to the first surface (2), and opposite sides between them;
- at least two light-emitting diode assemblies (10) respectively emitting light toward the two opposite sides of the light guide (12);
- a reflective portion (14), which faces the first surface (2) of the light guide (12), at least partially reflecting light output via the light guide (12) to the exterior of the lighting device; and
- a plate (20) comprising a first light-pervious surface (8) and a second light-pervious surface (6) opposite to the first light-pervious surface (8), wherein the first light-pervious surface (8) is closer to the light guide (12) than the second light-pervious surface (6) to receive the light output from the light guide;
wherein a plurality of miniature structures (18) is distributed over the first surface (2) of the light guide (12) to change a refraction angle of the light with respect to the light guide (12);
and wherein a plurality of geometric structures (22) is distributed over the second light-pervious surface (6), and the geometric structures (22) guide the light transmitted from the first light-pervious surface (8) to the exterior of the second light-pervious surface (6), uniformizing a luminous intensity within a specific vertical angle range.

2. A lighting device according to claim 1, wherein the miniature structures (18) are unevenly distributed over the first surface (2) of the light guide (12).

3. A lighting device according to claim 2, wherein the light guide (12) has a polygonal shape, for example a square or rectangular shape.

4. A lighting device according to claim 1, wherein the miniature structures (18) are evenly distributed over the first surface (2) of the light guide (12).

5. A lighting device according to claim 4, wherein the light guide (12) has a circular shape.

6. A lighting device according to any of the preceding claims, wherein miniature structures (18) are small recesses.

7. A lighting device according to claim 6, wherein the miniature structures (18) are obtained by means of a calendaring, wherein the calendering cylinder acting on the first surface (2) is superficially worked by laser incision.

8. A lighting device according to any one of the preceding claims, wherein the plate (20) is a flexible sheet.

9. A lighting device according to claim 8, wherein the plate is made by a thermoplastic material such as polycarbonate.

10. A lighting device according to any one of the preceding claims, further comprising a diffusion sheet (16) directly facing the geometric structures (22) distributed over the second light-pervious surface (6) of the plate (20).

11. A lighting device according to claim 10, wherein the diffusion sheet (16) is a rigid plate.

12. A lighting device according to claim 11, wherein the diffusion sheet (16) is made by methacrylate.

13. A lighting device according to any one of the preceding claims, wherein each light-emitting diode assembly comprises at least one LED.

14. A lighting device according to any one of the preceding claims, wherein the lighting device is a flat lighting panel.
